# EUROPÄISCHE PATENTSCHRIFT

(11) **EP 2 116 411 B1**
(45) Veröffentlichungstag und Bekanntmachung des Hinweises auf die Patenterteilung: **22.08.2018**
(21) Anmeldenummer: 09159451.5
(22) Anmeldetag: 05.05.2009
(51) Int. Cl.: B60K 23/08

(54) **Antriebsstrang für ein Kraftfahrzeug mit zuschaltbarer Sekundärachse**
Power train for a motor vehicle with secondary axis which can be activated
Chaîne cinématique pour une véhicule automobile doté d'un axe secondaire commutable

(30) Priorität: 06.05.2008 DE 102008002844; 13.11.2008 DE 102008057272
(43) Veröffentlichungstag der Anmeldung: 11.11.2009
(73) Patentinhaber: GKN Automotive Limited, Redditch Worcestershire B98 0AJ (GB)
(72) Erfinder: Hoffmann, Werner, 53721, Siegburg (DE); Nett, Hans-Peter, 53518, Adenau (DE); Höck, Michael, 53819, Neunkirchen-Seelscheid (DE); Potulski, Jan, 50733, Köln (DE); Adelt, Matthias, 44807, Bochum (DE)
(74) Vertreter: Bungartz Christophersen Partnerschaft mbB Patentanwälte

(56) Entgegenhaltungen:
- DE-A1- 19 800 328
- DE-A1-102004 015 304
- JP-A- H0 257 725
- JP-A- 2002 370 557
- US-A1- 2004 106 487
- US-A1- 2006 163 018
- US-A1- 2007 238 567

## Beschreibung

Die Erfindung betrifft einen Antriebstrang eines Kraftfahrzeugs nach dem Oberbegriff des Anspruchs 1. Der Antriebstrang umfasst insbesondere eine über einen Primärantriebsstrang permanent angetriebene Primärachse und eine der Primärachse über eine Zuschalteinrichtung zuschaltbare, von einem Sekundärantriebsstrang antreibbare Sekundärachse, wobei die Zuschalteinrichtung einen Zuschaltmechanismus aufweist, über den der Sekundärantriebsstrang in den die Gesamtantriebsleistung übertragenden Antriebsstrang integrierbar ist, und wobei bei zugeschalteter Sekundärachse die Sekundärachsantriebsleistung über Seitenwellenkupplungen in Seitenwellen der Sekundärachse eingeleitet und auf Antriebsräder der Sekundärachse übertragen ist, wobei der Zuschaltmechanismus und/oder die zumindest eine Seitenwellenkupplung zumindest einereibschlüssige Kupplung aufweisen und der zwischen der Zuschalteinrichtung und der zumindest einen Seitenwellenkupplung befindliche Abschnitt des Sekundärantriebsstrangs als entkop-pelbarer Sekundärantriebsstrangabschnitt vorgesehen ist, der bei entkoppelter Sekundärachse sowohl von dem Primärantriebsstrang, insbesondere von der Primärachse, als auch von den Se-kundärantriebsrädern entkoppelt ist.

Antriebsstränge mit zuschalttbarem Allradantrieb sind im Kraftfahrzeugbau bekannt. Sie dienen dazu, dem Fahrer in bestimmten Betriebssituationen die Möglichkeit zu geben, die Antriebsleistung auf alle Antriebsräder des Fahrzeugs zu verteilen.

Bekannt sind einerseits Antriebsstränge, die die Zuschaltung der Sekundärachse meist ausschließlich dann erlauben, wenn das Fahrzeug steht. Hierzu gehören insbesondere

Andererseits sind auch Antriebsstränge bekannt, die eine Zuschaltung während der Fahrt ermöglichen. Eine zuschaltbare Sekundärachse wird auch als "Hang-On" Achse bezeichnet. Hierbei werden über eine im Gesamtantriebsstrang vorgesehene Kupplung die Sekundärantriebsräder vom Fahrzeugantrieb abgekoppelt. Es kommen dabei insbesondere reibschlüssige Kupplungen zum Einsatz, die ein Zuschalten der Sekundärachse während der Fahrt ermöglichen. Einen derartigen Antriebsstrang offenbaren zum Beispiel die US Offenlegungsschrift US 2006/0163018 A1, die deutschen Offenlegungsschriften DE 10 2004 015 304 A1 und DE 198 00 328 A1 oder die japanische Offenlegungsschrift JP 2002-370557 A, welche den Oberbegriff des Anspruchs 1 definiert.

Antriebsstränge mit zuschaltbaren Sekundärachsen bringen allerdings eine Reihe von Nachteilen mit sich. Zunächstistzu beachten, dass die Antriebsräder der Primärachse und die Antriebsräder der Sekundärachse insbesondere bei Kurvenfahrten, aber auch in anderen Betriebssituationen, unterschiedliche Wege zurücklegen, was ohne einen entsprechenden Drehzahldifferenzausgleich zu Verspannungen im Antriebsstrang führen würde. Um Verspannungen, die durch unterschiedliche Antriebsraddrehzahlen an Primärachse und Sekundärachse hervorgerufen werden, abzubauen, ist ein Längsausgleich bzw. Längsdifferential vorzusehen. Verspannungen, die durch unterschiedliche Antriebsraddrehzahlen der Antriebsräder der Sekundärachse hervorgerufen werden, werden durch einen Querausgleich, der üblicher Weise durch ein Querdifferential gebildet wird, ausgeglichen. Außerdem muss die Sekundärachsantriebsleistung ausgehend von der regulär angetriebenen Primärachse auf die Sekundärachse übertragen werden, was üblicher Weise über ein Winkelgetriebe und eine Zwischenwelle, an die sich das Querdifferential anschließt, geschieht. Diese gegenüber einem Fahrzeug, das ausschließlich mit einer permanent angetriebenen Primärachse ausgestattet ist, vorzusehenden zusätzlichen Systemkomponenten machen den Antriebsstrang in konstruktiver Hinsicht deutlich komplexer. In der Folge sind die Kosten des Fahrzeugs in der Entwicklung und Konstruktion merklich höher. Auch die größere Anzahl an benötigten Bauteilen macht einen solchen Antriebsstrang teuer und trägt zu einem Mehrgewicht bei, das wiederum zu einem Kraftstoffmehrverbrauch führt.

Darüber hinaus verringern zahlreiche Faktoren die im Betrieb tatsächlich zur Verfügung stehende Nettoantriebsleistung, also den Teil der antriebsseitig zur Verfügung gestellten Gesamtantriebsleistung, der tatsächlich zum Vortrieb des Fahrzeugs nutzbar ist, und zwar auch dann, wenn die Sekundärachse nicht zugeschaltet ist. In diesem Fall ist der Sekundärachsantriebsstrang an einer Stelle zwischen der Primärachse und den Antriebsrädern über die Zuschalteinrichtung unterbrochen, so dass keine Antriebsleistung auf die Sekundärachsantriebsräder übertragen wird. Die Komponenten des Sekundärantriebsstrangs werden allerdings nach wie vor entweder durch den Fahrzeugantrieb über die Primärachse und/oder durch die Sekundärachsantriebsräder angetrieben bzw. passiv mitgeschleppt, ohne dabei Antriebsleistung zu übertragen. Dadurch treten Reibungsverluste (Lagerreibung, Panschverluste, Reibung von Zahnradeingriffen, usw.) auf und die rotierenden Massen der Sekundärabtriebsstrangkomponenten (Differential, Zwischenwelle, Kupplungen, usw.) sind bei dynamischer Fahrt ständig mit dem Fahrzeug zu beschleunigen bzw. zu verzögern. Diese Verlustleistung trägt maßgeblich dazu bei, dass der Kraftstoffverbrauch bei einem Fahrzeug mit zuschaltbarer Sekundärachse selbst bei entkoppelter Sekundärachse merklich höher ist als bei einem Kraftfahrzeug, das keine antreibbare Sekundärachse aufweist. Zieht man außerdem in Betracht, dass die Betriebszeiten, in denen die zuschaltbare Sekundärachse tatsächlich in den Gesamtantriebsstrang aktiv eingebunden ist, nur einen sehr geringen Anteil der Gesamtbetriebszeiten eines Fahrzeugs mit zuschaltbarer Sekundärachse ausmachen, lässt sich schlussfolgern, dass über die Gesamtbetriebszeit hinweg eine nicht unerhebliche Menge an Kraftstoff eingespart werden könnte. Kunden, die ein Fahrzeug wünschen, dass eine wahlweise zuschaltbare Sekundärachse vorsieht, müssen den Mehrverbrauch allerdings in Kauf nehmen, selbst wenn sie von der Zuschaltung kaum Gebrauch machen.

Aufgabe der Erfindung ist es daher, ein Antriebsstrang der eingangs genannten Art derart weiterzuentwickeln, dass bei entkoppelter Sekundärachse die Verlustleistung minimiert ist. Eine weitere Aufgabe der Erfindung besteht darin, den konstruktiven Mehraufwand und das damit einhergehende Mehrgewicht eines Fahrzeugs mit zuschaltbarer Sekundärachse trotz der Möglichkeit eines Längsausgleichs zwischen Primär- und Sekundärachse und der Möglichkeit eines Querausgleichs an der Sekundärachse zu reduzieren. Dabei soll eine antreibbare Sekundärachse vorgesehen werden, die während der Fahrt, insbesondere auch bei höheren Geschwindigkeiten, automatisiert zuschaltbar ist. Gegenüber den manuell zuschaltbaren Radnabenkupplungen sollen insbesondere Bedienungskomfort und Alltagstauglichkeit erhöht werden. Eine weitere Aufgabe besteht darin, eine Antriebseinheit zu schaffen, die diesen Anforderungen Rechnung trägt.

Diese Aufgabe wird nach der Erfindung durch einen Antriebsstrang nach Anspruch 1 gelöst.

Beim Zuschalten des Sekundärantriebsstrangs werden sowohl die Seitenwellenkupplung(en) als auch die Zuschalteinrichtung eingekuppelt, was den Sekundärantriebsleistungsfluss von der Primärachse zu den Sekundärachsantriebsrädern ermöglicht. Beim Entkoppeln des Sekundärantriebsstrangs werden sowohl die Seitenwellenkupplung(en) als auch die Zuschalteinrichtung entkoppelt, so dass bei entkoppelter Sekundärachse der zwischen der Zuschalteinrichtung und der bzw. den Seitenwellenkupplung(en) befindliche Abschnitt des Sekundärantriebsstrangs sowohl von der Antriebsleistung als auch von den Antriebsrädern der Sekundärachse entkoppelt ist. Dabei sollte angestrebt werden, möglichst viele Komponenten stillzulegen. Auch andere Maßnahmen, die die Verlustleistung reduzieren, sind sinnvoll.

Durch diese Ausgestaltung des Antriebsstrangs ist es möglich, einen Großteil des Sekundärantriebstrangs bei abgekoppelter Sekundärachse vollständig still zu legen. Die zu dem stillgelegten Abschnitt des Sekundärachsantriebsstrangs gehörenden Antriebsstrangkomponenten verursachen in der Folge keine Verlustleistung. Reibschlüssige Kupplungen sind vorgesehen, um insbesondere die Drehzahl der sowohl vom Fahrzeugantrieb als auch von den Antriebsrädern der Sekundärachse entkoppelten Komponenten des Sekundärantriebsstrangs vor dem Eingliedern in den Gesamtantriebsstrang an die Drehzahl der nicht entkoppelten Komponenten des Antriebsstrangs anzugleichen.

Bei einem nicht zur Erfindung gehörig angesehenen Antriebsstrang kann vorgesehen sein, dass die Seitenwellenkupplungen bei zugeschalteter Sekundärachse eine differentiallose Antriebsleistungsverteilung von dem zwischen der Zuschalteinheit und den Seitenwellenkupplungen befindlichen Teil des Sekundärantriebsstrangs auf die Antriebsräder der Sekundärachse nach Art eines Querdifferentials ausbilden, also insbesondere einen Querausgleich gewährleisten. Die Übertragung der Sekundärachsantriebsleistung auf die Sekundärachse findet also bevorzugt nicht über ein herkömmliches Differentialgetriebe statt, sondern über einen differentiallosen, rein kupplungsgesteuerten Achsantrieb. Die Seitenwellen sind dabei über jeweils eine Seitenwellenkupplung mit dem zwischen der Zuschalteinrichtung und den Seitenwellenkupplungen befindlichen Teil des Sekundärachsantriebsstrangs verbunden. Da die Seitenwellenkupplungen individuell ansteuerbar sind, lässt sich ein definiertes Schlupfverhalten abbilden. Dies hat den weiteren Vorteil, dass über die Seitenwellenkupplungen nicht nur ein Querausgleich, sondern zugleich auch ein Längsausgleich gewährleistet werden kann. Somit bilden die Seitenwellenkupplungen bei zugeschalteter Sekundärachse eine differentiallose Antriebsleistungsverteilung zwischen der Primärachse und der Sekundärachse nach Art eines Längsdifferentials aus. Ein gesondert vorzusehender Längsausgleich, zum Beispiel in Form eines geregelten Längsdifferentials, kann entfallen.

In einer weiter bevorzugten Ausführungsform weist die Zuschalteinrichtung ein formschlüssig arbeitendes Kraftübertragungsgetriebe, insbesondere ein über Zahnräder arbeitendes Winkelgetriebe, auf. Dabei ist darauf zu achten, dass dieses formschlüssig arbeitende Getriebe geschaltet werden kann, so dass der Formschluss bei nicht zugeschalteter Sekundärachse aufgehoben ist und der zwischen der Zuschalteinrichtung und den Seitenwellenkupplungen befindliche Abschnitt des Sekundärantriebsstrangs vom Fahrzeugantrieb entkoppelt ist. Die Zuschalteinrichtung ist bevorzugt an der Primärachse angeordnet und die Sekundärachsantriebsleistung ist dabei bevorzugt durch den Zuschaltmechanismus bei zugeschaltetem Sekundärantriebsstrang unmittelbar von einer Primärachswelle abgegriffen. Mit Primärachswelle ist nicht notwendiger Weise eine Seitenwelle der Primärachse gemeint. Entscheidend ist vielmehr die räumliche und funktionale Zuordnung der Primärachswelle zum Primärantriebsstrang. Bevorzugt rotiert die Primärachsantriebswelle konzentrisch zu den Primärachsseitenwellen.

Das formschlüssige Kraftübertragungsgetriebe muss selbstverständlich für die vorzusehenden Schaltvorgänge, also insbesondere das Ein- bzw. Auskuppeln des Sekundärantriebsstrangs, synchronisiert werden. Eine solche Drehzahlsynchronisation kann einerseits mittels einer dem Fachmann ohne weiteres geläufigen Getriebesynchronisation gewährleistet werden. Bevorzugt wird das Kraftübertragungsgetriebe zum Herstellen des Formschlusses allerdings über die zumindest eine Seitenwellenkupplung synchronisiert. Soll der zwischen den Seitenwellenkupplungen und der Zuschalteinrichtung befindliche Teil des Sekundärantriebsstrangs zur Übertragung eines Teils der zur Verfügung stehende Gesamtantriebsleistung auf die Sekundärachse dem Gesamtantriebsstrang zugeschaltet werden, so lässt sich durch Einkuppeln der zumindest einen Seitenwellenkupplung der Sekundärantriebsstrang, der dann von den auf der Straße abrollenden Antriebsrädern angetrieben ist, auf Schaltdrehzahl schleppen und somit eine Drehzahlsynchronisation vornehmen. Nach Erreichen der Synchronisationsdrehzahl lässt sich der Formschluss über den Zuschaltmechanismus der Zuschalteinrichtung herstellen. Selbst wenn trotz einer solchen Drehzahlangleichung auf eine herkömmliche Synchronisation nicht verzichtet werden soll, so kann dadurch, dass vor der Ankopplung des Sekundärantriebsstrangs die zumindest eine reibschlüssige Seitenwellenkupplung leicht geschlossen werden, die Synchronisation unterstützt werden. Die Synchronkräfte fallen dadurch gering aus. Die Bauteile können für geringere Belastungen ausgelegt werden, was auch der Lebensdauer der Bauteile zu Gute kommt.

Weiter kann vorgesehen sein, dass die die wenigstens eine Seitenwellenkupplung von einer reibschlüssigen Lamellenkupplung gebildet sind, wobei die mit den Sekundärantriebsrädern drehfest verbundenen Reiblamellen mit einem Innenlamellenträger und die fahrzeugantriebsseitigen Lamellen mit einem Außenlamellenträger zusammenwirken. Diese Ausgestaltung ermöglicht den besonders energieeffizienten Einsatz einer bedarfsgesteuerten Beölung der Lamellenpakete ohne zusätzliche, externe Ölförderung. Das Lamellengehäuse bildet dabei einen mit Schmier- und Kühlöl befüllten Ölsumpf, in den die Kupplungslamellen eintauchen. Rotiert der Außenlamellenträger, so nimmt dieser an seiner Außenseite das Öl mit und führt es einem Ölkreislauf zu. Diese mit Verlustleistung behaftete Ölförderleistung entfällt dann, wenn der Außenlamellenträger bei geöffneter Kupplung nicht rotiert. Dies ist allerdings nur möglich, wenn der Außenlamellenträger Teil des abschaltbaren Abschnitts des Sekundärantriebsstrangs bildet.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Fig. 1 einen ersten Antriebsstrang mit permanent angetriebener Primärachse und zuschaltbarer Sekundärachse, dessen zu Grunde liegendes Funktionsprinzip aus dem Stand der Technik bekanntist,
Fig. 2 einen zweiten Antriebsstrang mit permanent angetriebener Primärachse und zuschaltbarer Sekundärachse, dessen zu Grunde liegendes Funktionsprinzip aus dem Stand der Technik bekanntist,
Fig. 3 einen nicht zur Erfindung gehörigen Antriebsstrang mit permanent angetriebener Primärachse und zuschaltbarer Sekundärachse, dessen zwischen Seitenwellenkupplungen und Zuschalteinrichtung liegender Abschnitt des Sekundärantriebsstrangs stillgelegt ist,
Fig. 4 eine Zuschalteinrichtung aus Fig. 3 im Detail,
Fig. 5 einen Querschnitt durch eine Seitenwellenkupplung eines differentiallosen Achsantriebs mit selbsttätiger Bedarfsbeölung,
Fig. 6 ein Figur 3 im Wesentlichen entsprechendes Antriebsstrangkonzept, wobei an der Sekundärachse einseitig eine formschlüssig wirkende Seitenwellenkupplung vorgesehen ist,
Fig. 7 eine erste Darstellung einer an der Primärachse vorgesehenen Zuschalteinrichtung mit einer Synchronisationseinheit,
Fig. 8 eine zweite Darstellung einer an der Primärachse vorgesehenen Zuschalteinrichtung mit einer Synchronisationseinrichtung,
Fig. 9 eine die Sekundärachse antreibende Achsantriebseinheit mit einer formschlüssig wirkenden Seitenwellenkupplung für die linke Seitenwelle und
Fig. 10 eine die Sekundärachse antreibende Achsantriebseinheit, bei der auf einer Seite ganz auf eine Seitenwellenkupplung verzichtet ist.

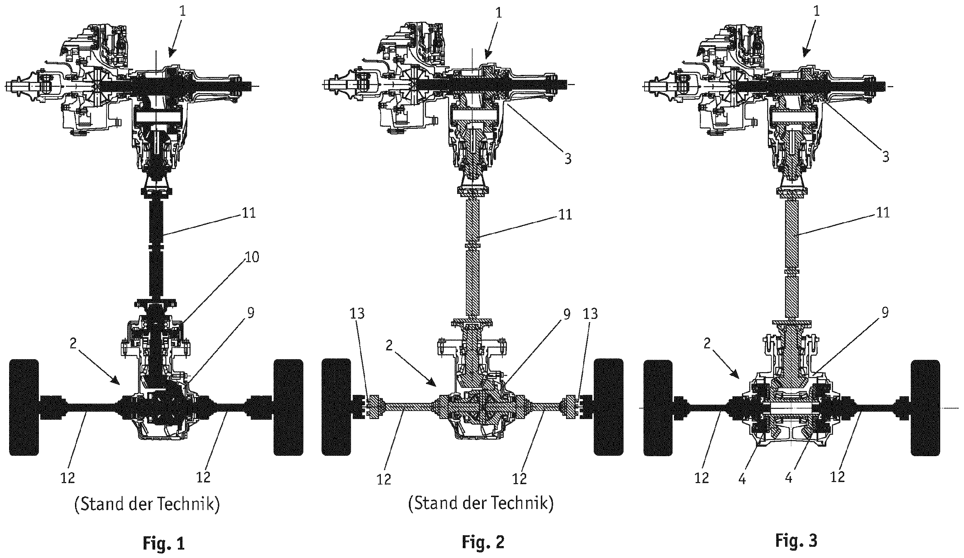

In Figur 1 ist ein Antriebsstrang eines Kraftfahrzeugs gezeigt, der hinsichtlich seines Funktionsprinzips aus dem Stand der Technik bekannt ist. Die Primärachse 1 ist permanent angetrieben. Ein nicht schaltbares Winkelgetriebe zweigt einen Teil der Antriebsleistung von der Primärachse 1 ab und leitet sie in den Sekundärantriebsstrang, der zum Antrieb der Sekundärachse 2 dient, ein. Vor der Achsantriebseinheit 9 ist eine Hang-On Kupplung 10 vorgesehen, die im geschlossenen Zustand eine Zwischenwelle 11 und die Achsantriebseinheit 9 kraftschlüssig koppelt und so die Sekundärachsantriebsleistung bei Bedarf in die Achsantriebseinheit 9 einzuleiten vermag. Die Achsantriebseinheit 9 ist von einem herkömmlichen Aufbau und weist ein Kegelraddifferential auf, an das sich die Sekundärachsseitenwellen 12 anschließen.

Figur 2 zeigt einen Antriebsstrang eines Kraftfahrzeugs, dessen Funktionsprinzip ebenfalls aus dem Stand der Technik bekannt ist. Im Gegensatz zu Figur 1 ist die Achsantriebseinheit 9 nicht über eine schaltbare Kupplung mit der Zwischenwelle 11 verbunden, sondern die Zwischenwelle 11 ist fest an der Achsantriebseinheit 9 angeflanscht. Um die Antriebsräder der Sekundärachse 2 von der Antriebsleistung zu entkoppeln, sind formschlüssig arbeitende Klauenkupplungen 13 an den Radnaben vorgesehen, die entweder aufwendig von Hand oder durch zusätzlich vorzusehende Zuschaltvorrichtungen in Eingriff gebracht werden können, was aufgrund des Fehlens einer Drehzahlsynchronisation sowie einer Möglichkeit eines Drehzahlabgleichs zwischen den in Eingriff zu bringenden Bauteilen nur im Stand möglich ist. Im Gegensatz zu dem an der Primärachse 1 angeordneten Winkelgetriebe des Antriebsstrangs aus Figur 1 ist das Winkelgetriebe des Antriebsstrangs aus Figur 2 als schaltbare Zuschalteinrichtung 3 ausgebildet, die auch als Power-Take-Off Unit, kurz PTU, bezeichnet wird.

Sowohl beim Antriebsstrang aus Figur 1 als auch beim Antriebsstrang aus Figur 2 ist der Sekundärantriebsstrang nicht in den die Gesamtantriebsleistung übertragenen Teil des Antriebsstrangs integriert und überträgt somit keine Antriebsleistung auf die Antriebsräder der Sekundärachse 2.

Im Beispiel aus Figur 1 rotieren trotzdem die schwarz gekennzeichneten Sekundärantriebsstrangkomponenten mit, denn die Komponenten des Antriebsstrangs, die aus Sicht der der Hang-On Kupplung 10 fahrzeugantriebsseitig angeordnet sind, werden über das Winkelgetriebe geschleppt, während die Sekundärantriebsstrangkomponenten, die aus Sicht der Hang-On Kupplung 10 in Richtung der Antriebsräder der Sekundärachse 2 angeordnet sind, von den auf der Fahrbahn abrollenden Antriebsrädern geschleppt werden.

Im Gegensatz zu dem Antriebsstrang aus Figur 1 rotiert bei dem Antriebsstrang aus Figur 2 ein wesentlicher Abschnitt des Sekundärantriebstrangs nicht mit (einfach schraffiert dargestellter Abschnitt), da antriebsradseitig die Radnabenkupplungen 13 und fahrzeugantriebsseitig die Zuschalteinrichtung 3 nicht in Engriff stehen. Der zwischen diesen Antriebstrangkomponenten angeordnete Abschnitt des Sekundärantriebsstrangs ist also stillgelegt.

Figur 3 zeigt einen Antriebsstrang, der nicht als zur Erfindung gehörig angesehen wird, mit permanent angetriebener Primärachse 1 und zuschaltbarer Sekundärachse 2, dessen zwischen Seitenwellenkupplungen 4 und Zuschalteinrichtung 3 liegender Abschnitt des Sekundärantriebsstrangs stillgelegt ist. Im Gegensatz zu den Achsantriebseinheiten 9 aus Figur 1 und Figur 2 ist die Achsantriebseinheit 9 aus Figur 3 differentiallos ausgebildet. Hier übertragen zwei reibschlüssig arbeitende Seitenwellenkupplungen 4 die Sekundärantriebsleistung auf die Sekundärachsseitenwellen 12 der Sekundärachse 2. Über diese frei regelbaren Seitenwellenkupplungen 4 lässt sich das zu übertragende Antriebsmoment und der Schlupf frei einstellen, so dass sich mit diesem Achsantrieb neben den Funktionen eines Querdifferentials auch Funktionen eines Längsdifferentials und eines Active-Yaw Differentials abbilden lassen. Die Achsantriebseinheit 9 in Figur 3 istim Vergleich zu den Achsantriebseinheiten 9 aus den Figuren 1 und 2 in konstruktiver Hinsicht wesentlich weniger komplex ausgebildet und deutlich leichter. Zum Stilllegen des Sekundärantriebsstrangs werden die Seitenwellenkupplungen 4 geöffnet und der Sekundärantriebsstrang über die Zuschalteinrichtung 3 von dem permanent angetriebenen Teil des Antriebsstrangs abgekoppelt. Weder die Seitenwellenkupplungen 4 noch die Zuschalteinrichtung 3 könnten für sich genommen den erfindungsgemäßen Grundgedanken verwirklichen, im Hinblick auf die Erfindung wirken sie vielmehr in einer synergetischen Weise zusammen.

Ein rechnerischer Vergleich der Antriebsstrangkonzepte aus den Figuren 1, 2 und 3 hat gezeigt, dass die in den Gesamtantriebssträngen bei abgeschalteter Sekundärachse 2 auftretenden Verlustleistungen deutlich unterschiedlich sind. Während durch die Vielzahl der rotierenden Antriebsstrangkomponenten die Verlustleistung des Antriebsstrangs aus Figur 1 bei 100 km/h etwa 2,7 kW beträgt, so beträgt sie bei einem Antriebsstrang gemäß Figur 2 bei der selben Geschwindigkeit nur etwa 0,08 kW, also weniger als ein Dreißigstel, wobei aber bei dem letztgenannten Antriebsstrang die bereits aufgeführten Nachteile eine erhebliche Einschränkung an Komfort und Praktikabilität mit sich bringen. Die im Antriebsstrang von Figur 3 bei 100 km/h auftretende Verlustleistung wurde mit 0,31 kW errechnet und liegt damit nur unwesentlich über der Verlustleistung des Antriebsstrangs aus Figur 2, beträgt aber immerhin nur etwa ein Zehntel der Verlustleistung, die beim Antriebsstrang aus Figur 1 zu erwarten ist, ohne dass der Fahrer dabei Komfort- und Praktikabilitätseinbußen hinnehmen müsste.

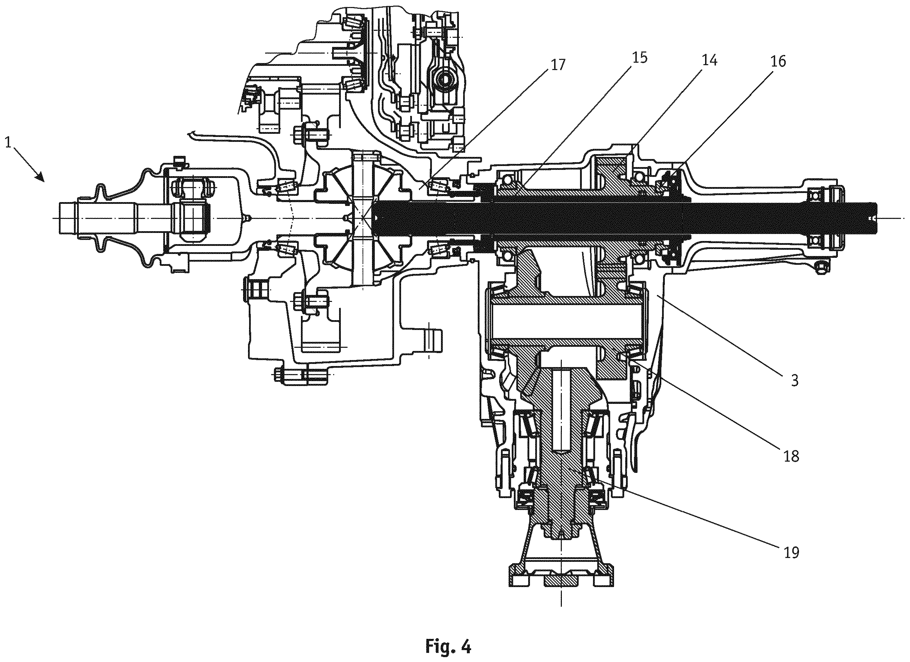

Figur 4 zeigt die Zuschalteinrichtung 3 aus Figur 3 im Detail. Es handelt sich um ein schaltbares Winkelgetriebe, bei dem der Formschluss dadurch erfolgt, dass eine Stirnradstufe 14 mit einer Verbindungswelle 15, die vom Antriebskorb 17 des Primärachsdifferentials permanent angetrieben ist, mit Hilfe eines Zuschaltmechanismus, der hier von einer Synchronisierung 16 gebildet ist, in Eingriff gebracht wird. Wie aus der Figur 4 ersichtlich, rotiert bei abgeschaltetem Sekundärantrieb die Stirnradstufe 14 nicht mit dem permanent angetriebenen Primärantriebstrang mit. Der Koppelpunkt zwischen permanent angetriebenem Primärantriebsstrang und zuschaltbarem Sekundärantriebsstrang ist also die Synchronisierung 16. Bei zugeschaltetem Sekundärantriebsstrang überträgt die Stirnradstufe 14 die Sekundärachsantriebsleistung zunächst über eine Querwelle 18 auf ein Tellerrad, das die Antriebsleistung wiederum über eine Ritzelwelle 19 in die Zwischenwelle 11 einleitet und somit zur Sekundärachse 2 weiterleitet.

Eine solche mehrstufige Ausführung der Weiterleitung des Sekundärantriebsleistungsflusses ist nicht zwingend erforderlich. Es können auch weitere Vereinfachungen vorgenommen werden, beispielsweise dadurch, dass schon die Verbindungswelle 15 kein Stirnrad, sondern direkt ein Tellerrad zur Weiterleitung der Sekundärantriebsleistung in die Ritzelwelle 19 vorsieht.

Um die Synchronisierung von Stirnradstufe 14 und Verbindungswelle 15 zu unterstützen, ist vorgesehen, dass die Seitenwellenkupplungen 4 vor dem Synchronisieren der Wellen geschaltet werden, um die Zwischenwelle 11 und somit auch die Stirnradwelle 14 auf Drehzahl zu bringen. Die Betätigung des Zuschaltmechanismus erfolgt vorzugsweise hydraulisch, kann aber selbstverständlich auch auf andere Weise, zum Beispiel pneumatisch, elektromotorisch oder elektromagnetisch, erfolgen.

Neben der in Figur 4 dargestellten formschlüssig arbeitenden Synchronisierung 16 ist es selbstverständlich auch denkbar, andere formschlüssige oder auch kraftschlüssige Zuschaltmechanismen vorzusehen. So kann an Stelle der Synchronisierung 16 auch eine reibschlüssige Kupplung den Sekundärantriebsleistungsfluss von der Verbindungswelle 15 auf die Stirnradstufe 14 gewährleisten. In diesem Fall könnten außerdem formschlüssig arbeitende Seitenwellenkupplungen 4 vorgesehen sein, wodurch allerdings die Vorteile eines differentiallosen Antriebsstrangs aufgegeben werden würden. Trotzdem sind durchaus Fälle denkbar, in denen sich eine solche Lösung anbieten könnte.

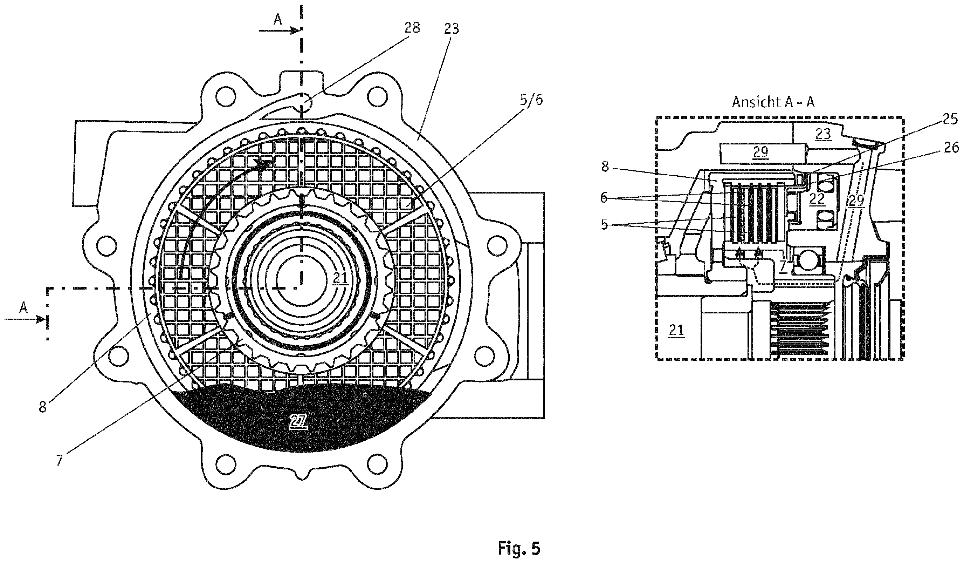

Ein weiterer Aspekt, der die Verlustleistung im Sekundärantriebsstrang minimiert und zum Erfindungsgedanken beiträgt, ist eine Bedarfsbeölung der Seitenwellenkupplungen 4 bzw. der Lammellenpakete, die in Figur 5 dargestellt ist. Ist die Seitenwellenkupplung 4 geschlossen, rotiert der Außenlamellenträger 8 und schöpft mit seiner Außenseite Öl aus einem Ölsumpf 27, der in Figur 5 von dem Kupplungsgehäuse gebildet ist. Hierdurch wird das Öl in die Ölfangtasche 28 gefördert. Von dort aus gelangt das Öl über die Ölleitbohrungen 29 in den Innenlamellenträger 7 und wird von der Fliehkraft radial nach außen verteilt. Diese Beölung dient zur Schmierung und Kühlung des Lamellenpakets. Ist die Seitenwellen kupplung 4 jedoch geöffnet und der Sekundärantriebsstrang abgeschaltet, so dass die Kupplung keinen Kühl- und Schmierbedarf hat, steht der Außenlamellenträger und es wird folglich auch kein Öl gefördert, was ebenfalls zur Verringerung der Verlustleistungen bei entkoppeltem Sekundärantriebsstrang beiträgt.

Bei den Seitenwellenkupplungen 4 kann ferner Verlustleistung dadurch eingespart werden, dass die Reiblamellen der Seitenwellenkupplungen 4 je nachdem, ob es sich um Außenlamellen 8 oder Innenlamellen 7 handelt, unterschiedlich ausgestaltet werden. So können die Innenlamellen 7, also die Reiblamellen, die, wie vorstehend beschrieben wurde, bevorzugt drehfest mit den Sekundärachsseitenwellen 12 der Sekundärachse 2 verbunden sind und sich daher permanent drehen, als blanke Stahlscheiben mit verhältnismäßig reibungsarmer Oberfläche ausgestaltet sein. Rotieren diese während der Fahrt mit ständigem Kontakt zum Kühl- und Schmieröl, verursachen sie so nur geringe Reibungsverluste. Die Außenlamellen 8 hingegen, die bei abgeschaltetem Sekundärachsantriebsstrang ohnehin bevorzugt stillstehen, können den eigentlichen Reibbelag und eine hierin oder gesondert angeordnete Schmier- und Kühlöl fördernde Benutung aufweisen.

Die vorstehend beschriebene Erfindung basiert auf einem sogenannten Hang-On Allradkonzept. Im Gegensatz zum permanenten Allrad wird beim Hang-On System die zweite Achse bei Bedarf über eine Kupplung aktiv zugeschaltet. Auswertungen von Lastkollektivdaten zeigen, dass die Hang-On Systeme nur geringe "aktive Zeitanteile" im Fahrzeugzyklus aufweisen. Die Erfindung nutzt die nicht aktiven Zeitanteile, um durch eine komplette Abschaltung des Allradantriebsstrangs die Leistungsverluste der drehenden Antriebskomponenten zu eliminieren.

Vorstehend ist die Erfindung im Rahmen eines Antriebsstrangkonzeptes beschrieben, bei dem die Allradabschaltung an der Hinterachse über die beiden Kupplungen realisiert wird. An der PTU (Power Take Off Unit) wird über eine Zuschalteinrichtung 3, die vorzugsweise eine Synchronisierung 16 aufweist, der Antriebsstrang zum Hinterachsgetriebe entkoppelt.

Die unter anderem in Figur 3 gezeigte Ausführung hat allerdings den Nachteil, dass bei besonders drehmomentstarken Geländefahrzeugen das Drehmoment nur über die ausschließlich reibschlüssig wirkenden Seitenwellenkupplungen 4 zu den Rädern der Sekundärachse 2 übertragen wird. Für besonders drehmomentstarke Geländefahrzeuge ist die Übertragung der Antriebsmomente ausschließlich über die reibschlüssigen Seitenwellenkupplungen 4 von Nachteil, da es aufgrund der Reibverluste im Kupplungspaket zu einer starken Wärmeentwicklung kommen kann. Ein formschlüssig arbeitendes Differential arbeitet dagegen quasi verlustfrei und ist daher für Drehmomentstarke Fahrzeuge am besten geeignet.

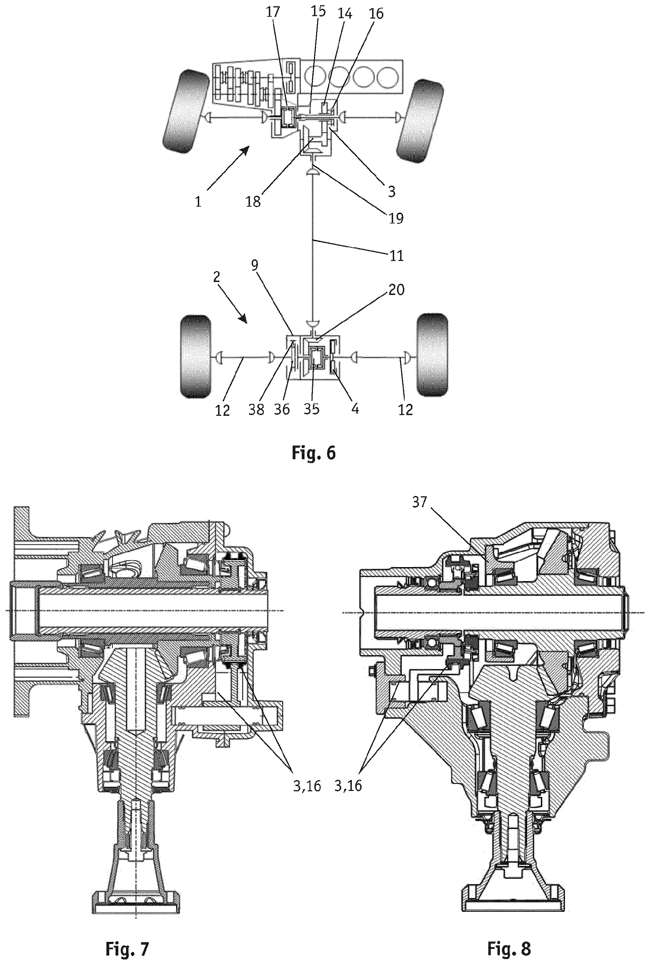

Die Figur 6 zeigt eine für drehmomentstarke Fahrzeuge angepasste Ausführung der zuvor beschriebenen Erfindung, die ein Abschaltsystem zur Abschaltung der Sekundärachse 2 mit formschlüssig wirkendem Sekundärachsdifferential 35, einer formschlüssig wirkenden seitlichen Seitenwellenkupplung 36 und mit einem zusätzlichen Schaltelement für diese Kupplung mit einer Sekundärachssynchronisierung 38 vorsieht. Das Schaltelement bzw. die Sekundärachssynchronisierung 38 sollte die formschlüssig wirkende Kupplung 36 in und außer Eingriff bringen können.

Die Abschaltung an der PTU wird, wie bereits beschrieben, aus Komfortgründen vorteilhaft über eine Synchronisierung 16 einer Zuschalteinrichtung 3 realisiert. Die Unterbringung der der Zuschalteinrichtung 3 samt Synchronisierung 16 links vom Tellerrad lässt sich relativ einfach realisieren, wie Figur 7 im Detail zeigt. Die Platzierung an dieser Stelle hat aber den Nachteil, dass der Bauraumbedarf an der PTU erheblich zunimmt.

Es wird daher vorgeschlagen, die Synchronisierung 16 innerhalb des vorhandenen PTU-Gehäuses zu platzieren, wie Figur 8 illustriert. Hierzu wird das linke Tellerradlager über ein separates Lagerschild 37 im Gehäuse fixiert. Um die Synchronisierung 16 zu montieren, wird dieses Lagerschild 37 mittels Schrauben oder sonstigen geeigneten Befestigungsmitteln mit dem PTU Gehäuse verbunden.

Die Synchronisierung 16 wird bevorzugt zwischen der Tellerradwelle und der Antriebswelle platziert. Wie in Figur 8 ersichtlich, passt die Einheit der Synchronisierung 16 sowie die dazugehörige Schaltung in die vorhandene Hüllkurve der PTU. Dies hat für den Kunden den Vorteil, dass die abschaltbare PTU in das vorhandene Package passt.

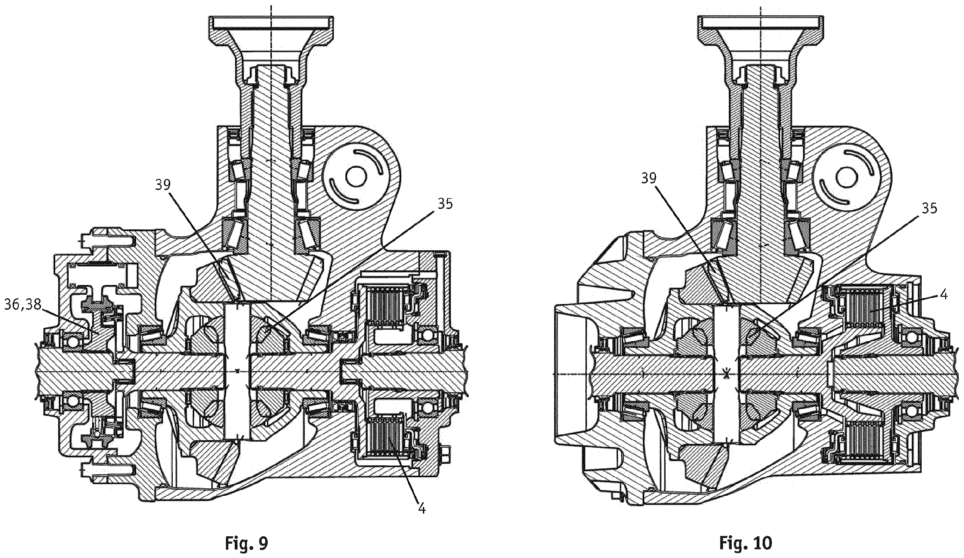

An der Hinterachse ist links neben dem Sekundärachsdifferential 35 eine formschlüssig wirkende Seitenwellenkupplung 36 vorgesehen, die über ein Schaltelement mit einer Sekundärachssynchronisierung 38 geschaltet wird (Figur 9). Rechts neben dem Sekundärachsdifferential 35 befindet sich eine reibschlüssig wirkende Seitenwellenkupplung 4. Die Kupplung übernimmt dabei eine Doppelfunktion.

Im aktivierten Allradstrang, in dem alle Synchronisierungen 16, 38 geschlossen sind, arbeitet die Seitenwellenkupplung 4 als Hang-On System, bei dem das Drehmoment dosiert zu den Rädern übertragen wird. Ist die Kupplung offen, wird kein Drehmoment zu den Rädern übertragen, da das Differential im Achskörper frei drehen kann und nicht abgestützt wird. Im deaktivierten Allradstrang, also bei nicht in die Antriebsleistungsübertragung eingebundener Sekundärachse 2, wird die linke Synchronisierung 38 geöffnet, so dass beide Sekundärachsseitenwellen 12 und somit auch die Räder keine Verbindung zu den Hinterachskomponenten haben. Dieser Zustand wirkt sich besonders verbrauchsmindernd aus, da die Achskomponenten nicht rotieren und somit keine Verluste erzeugen, insbesondere wenn auch die in Figur 9 dargestellte reibschlüssige Seitenwellenkupplung 4 gleichzeitig geöffnet ist.

In einer weiteren Abwandlung wird vorgeschlagen, aus Kostengründen auf die zusätzliche Abschaltung an der Hinterachse zu verzichten (Figur 10). Im Gegensatz zur Lösung gemäß Figur 9, bei der im abgeschalteten Modus alle Teile der Achse stillstehen, drehen sich hierbei noch die Ausgleichsräder des Sekundärachsdifferentials 35, da die Trennung der linken Sekundärachsseitenwelle von Ausgleichsradsatz durch das Fehlen der Synchronisierung bzw. Kupplung fehlt und diese daher mitrotieren. Durch diesen Umstand ist ein geringer Verbrauchsnachteil gegenüber der Lösung in Figur 9 zu erwarten. Diesem Nachteil steht aber der geringere Kostenaufwand gegenüber. Das hat den Vorteil, dass der Hersteller bzw. der Kunde zwischen der eher verbrauchsoptimierten oder einer eher kostenoptimierten Lösung wählen kann.

Die Allradzuschaltung während der Fahrt sollte auch bei µ-Sprung bzw. µ-Split Bedingungen ohne Komforteinbußen von statten gehen und nicht als störend vom Fahrer wahrgenommen werden. Die Verwendung von sowohl einer Synchronisierung 38 an der Hinterachse (Sekundärachssynchronisation 38) als auch einer Synchronisierung 16 an der PTU wirkt sich vorteilhaft auf die Zuschaltgeschwindigkeit aus. Diese Zuschaltung wird im Folgenden für den in Figur 6 gezeigten Antriebsstrang beschrieben.

Bei einer Zuschaltung während der Fahrt wird zuerst die Sekundärachssynchronisation 38 an der Hinterachse geschlossen und somit die Differentialräder auf Drehzahl beschleunigt. Danach wird die Seitenwellenkupplung 4 geschlossen. Somit werden über die Räder die komplette Hinterachse sowie die als Kardanwelle ausgebildete Zwischenwelle 11 und der abgekoppelte Teil der PTU beschleunigt. Als letztes wird die Synchroneinheit 16 an der PTU eingelegt und der Kraftschluss zum Getriebe ist hergestellt. Diese Schaltsequenz hat den Vorteil, dass über die Hinterräder und die Seitenwellenkupplung 4 der komplette Antriebsstrang beschleunigt wird. Insbesondere wird er nach und nach beschleunigt, so dass die Synchronisierung 16 und die Sekundärachssynchronisation 38 entlastet werden, da die Masse der Bauteile, die zwecks einer Drehzahlangleichung zu beschleunigen sind, verhältnismäßig gering bleibt.

Bei einer Zuschaltung bei µ-Sprung Bedingungen - die Vorderräder drehen durch und die Hinterachse steht - wird zuerst die Synchronisierung 16 an der PTU geschlossen und der Antriebsstrang bis hin zur Hinterachse wird beschleunigt. Danach wird die Sekundärachssynchronisation 38 an der Hinterachse eingelegt und die Verbindung zum linken Hinterrad hergestellt. Mit anschließender Zuschaltung der reibschlüssigen Seitenwellenkupplung 4 kann das Antriebsdrehmoment dosiert zu den Hinterrädern geleitet werden. Auch hierdurch lassen sich die gleichen wie vorstehend zur Zuschaltung während der Fahrt beschriebenen Vorteile realisieren.

Es ist ein Antriebstrang eines Kraftfahrzeugs beschrieben worden, umfassend eine permanent angetriebene Primärachse 1 und eine der Primärachse 1 über eine Zuschalteinrichtung 3, insbesondere eine oder mehrere formschlüssig wirkende Synchronisationseinheiten aufweisende Zuschalteinrichtung 3, zuschaltbare Sekundärachse 2.

Ebenfalls beschrieben wurde eine Sekundärachsantriebseinheit für den im vorstehenden Absatz definierten Antriebsstrang, aufweisend eine reibschlüssig wirkende erste Kupplung und eine als Synchronisierung wirkende formschlüssige zweite Kupplung, über die die mit dem Sekundärachsantrieb zusammenwirkenden Abtriebswellen von der dem Sekundärachsantrieb entkoppelbar sind.

### Bezugszeichenliste

- 1: Primärachse
- 2: Sekundärachse
- 3: Zuschalteinrichtung
- 4: Seitenwellenkupplungen
- 5: Innenlamellen
- 6: Außenlamellen
- 7: Innenlamellenträger
- 8: Außenlamellenträger
- 9: Achsantriebseinheit
- 10: Hang-On Kupplung
- 11: Zwischenwelle
- 12: Sekundärachsseitenwelle
- 13: Radnabenkupplung
- 14: Stirnradstufe
- 15: Verbindungswelle
- 16: Synchronisierung
- 17: Antriebskorb (Primärachsdifferential)
- 18: Querwelle
- 19: Ritzelwelle
- 27: Ölsumpf
- 28: Ölfangtasche
- 29: Ölleitbohrung
- 35: Sekundärachsdifferential
- 36: Seitenwellenkupplung (formschlüssig)
- 37: Lagerschild
- 38: Sekundärachssynchronisierung

## Patentansprüche

1. Antriebstrang eines Kraftfahrzeugs, umfassend eine über einen Primärantriebsstrang permanent, angetriebene Primärachse (1) und eine der Primärachse über eine Zuschalteinrichtung (3) zuschaltbare Sekundärachse (2), wobei die Zuschalteinrichtung (3) einen Zuschaltmechanismus aufweist, über den der Sekundärantriebsstrang in den die Gesamtantriebsleistung übertragenden Antriebsstrang integrierbar ist, wobei bei zugeschalteter Sekundärachse (2) die Sekundärachsantriebsleistung über zumindest eine Seitenwellenkupplung (4, 36) in Sekundärachsseitenwellen (12) der Sekundärachse (2) eingeleitet und auf Antriebsräder der Sekundärachse (2) übertragen ist, wobei der Zuschaltmechanismus und/oder die zumindest eine Seitenwellenkupplung (4, 36) zumindest eine reibschlüssige Kupplung aufweisen und der zwischen der Zuschalteinrichtung (3) und der zumindest einen Seitenwellenkupplung (4, 36) befindliche Abschnitt des Sekundärantriebsstrangs als entkoppelbarer Sekundärantriebsstrangabschnitt vorgesehen ist, der bei entkoppelter Sekundärachse sowohl von dem Primärantriebsstrang, insbesondere von der Primärachse (1), als auch von den Sekundärantriebsrädern entkoppelt ist, wobei im Antriebsstrang eine die Sekundärachse antreibende Achsantriebseinheit (9) mit einem Sekundärachsdifferential (35), das ein formschlüssig wirkendendes Differentialgetriebe mit Ausgleichsrädern umfasst, zur Übertragung der Antriebsleistung auf die Sekundärachsseitenwellen (12) der Sekundärachse (2) vorgesehen ist, **dadurch gekennzeichnet, dass** die Achsantriebseinheit (9) ein Kupplungsgehäuse bildet, das zur Bildung einer Aufnahme für die Seitenwellenkupplung (4) auf einer Seite eine nach außen gerichtete, über einen lösbaren Deckel verschlossene Ausnehmung aufweist, wobei in der Aufnahme eine reibschlüssig wirkende Seitenwellenkupplung (4) für eine erste Sekundärachsseitenwelle (12) auf einer Seite des Differentialgetriebes angeordnet ist, und wobei
- auf der anderen Seite des Differentialgetriebes eine formschlüssig wirkende Seitenwellenkupplung (36) für eine zweite Sekundärachsseitenwelle (12) vorgesehen ist, die über ein Schaltelement mit einer Sekundärachssynchronisierung (38) geschaltet ist,
oder
- zu der anderen Seite des Differentialgetriebes auf eine Seitenwellenkupplung verzichtet ist, so dass eine Trennung der zweiten Seitenwelle von einem Ausgleichsradsatz des Differentialgetriebes fehlt und die Ausgleichsräder des Differentialgetriebes mitrotieren.

2. Antriebsstrang nach dem vorhergehenden Anspruch, **dadurch gekennzeichnet, dass** die Zuschalteinrichtung (3) ein formschlüssig arbeitendes Kraftübertragungsgetriebe, insbesondere ein über Zahnräder arbeitendes Winkelgetriebe, aufweist.

3. Antriebsstrang nach einem der beiden vorhergehenden Ansprüche, **dadurch gekennzeichnet, dass** die Zuschalteinrichtung (3) an der Primärachse (1) angeordnet ist und die Sekundärachsantriebsleistung durch den Zuschaltmechanismus bei zugeschaltetem Sekundärantriebsstrang unmittelbar von einer Primärachswelle abgriffen ist.

4. Antriebsstrang nach Anspruch 2 oder Anspruch 3 in Verbindung mit Anspruch 2, **dadurch gekennzeichnet, dass** das eine Drehzahlsynchronisation (16) im Zuschaltmechanismus des Kraftübertragungsgetriebes zum Herstellen des Formschlusses über die zumindest eine Seitenwellenkupplung (4, 36) vorgenommen oder zumindest unterstützt ist.

5. Antriebsstrang nach einem der vorhergehenden Ansprüche, **dadurch gekennzeichnet, dass** die zumindest eine reibschlüssig wirkende Seitenwellenkupplung (4) von einer reibschlüssigen Lamellenkupplung gebildet sind, wobei die mit den Sekundärantriebsrädern drehfest verbundenen Reiblamellen als Innenlamellen (5) mit einem Innenlamellenträger (7) und die fahrzeugantriebsseitigen Reiblarnellen als Außenlamellen (6) mit einem Außenlamellenträger (8) zusammenwirken.

6. Antriebstrang nach dem vorhergehenden Anspruch, **dadurch gekennzeichnet, dass** der Außenlamellenträger (8) bei zugeschalteter Sekundärachse (2) Öl zur Kühlung und/oder Schmierung der Reiblamellen fördert.

## Claims

1. Power train of a motor vehicle comprising a primary axle (1) which is continuously driven by means of a primary power train, and a secondary axle (2) which can be connected to the primary axle by means of a connection device (3), wherein the connection device (3) has a connection mechanism by means of which the secondary power train can be integrated into the power train which transmits the overall drive power, wherein when the secondary axle (2) is connected the secondary axle drive power is applied to secondary axle side shafts (12) of the secondary axle (2) by means of at least one side shaft clutch (4, 36) and is transmitted to drive wheels of the secondary axle (2), wherein the connection mechanism and/or the at least one side shaft clutch (4, 36) have at least one frictionally locking clutch, and the section of the secondary power train which is located between the connection device (3) and the at least one side shaft clutch (4, 36) is provided as a secondary power train section which can be uncoupled and which is uncoupled both from the primary power train, in particular from the primary axle (1), as well as from the secondary drive wheels, when the secondary axle (2) is uncoupled, wherein in the power train an axle drive unit (9) which drives the secondary axle (2) is provided with a secondary axle differential (35) which comprises a differential gear which acts in a positively locking fashion and comprises equalizing gears, for transmitting the drive power to the secondary axle side shafts (12) of the secondary axle (2), **characterized in that**
the axle drive unit (9) forms a clutch housing which has, on one side, an outwardly directed recess which is closed off by means of a detachable cover in order to form a receptacle for the side shaft clutch (4), wherein a side shaft clutch (4) which acts in a frictionally locking fashion, for a first secondary axle side shaft (12), is arranged in the receptacle, on a side of the differential gear, and wherein
- on the other side of the differential gear a side shaft clutch (36) which acts in a positively locking fashion is provided for a second secondary axle side shaft (12) which is connected to a secondary axle synchronization device (38) by means of a switching element,
or
- on the other side of the differential gear a side shaft clutch (36) is dispensed with, with the result that there is no separation of the second secondary side shaft (12) from an equalizing gear set of the differential gear and the equalizing gears of the differential gear rotate along.

2. Power train according to the preceding claim, **characterized in that** the connection device (3) has a force transmission gear which operates in a positively locking fashion, in particular an angular gear which operates by means of gear wheels.

3. Power train according to one of the two preceding claims, **characterized in that** the connection device (3) is arranged on the primary axle (1), and the secondary axle drive power is tapped directly from a primary axle shaft by the connection mechanism when the secondary power train is connected.

4. Power train according to claim 2 or claim 3 in conjunction with claim 2, **characterized in that** the one rotational speed synchronization operation (16) in the connection mechanism of the force transmission gear for bringing about the positive locking is performed or at least assisted by means of the at least one side shaft clutch (4, 36).

5. Power train according to one of the preceding claims, **characterized in that** the at least one side shaft clutch (4) which acts in a frictionally locking fashion is formed by a frictionally locking multi-plate clutch, wherein the friction plates which are connected in a rotationally fixed fashion to the secondary drive gears interact as internal plates (5) with an internal plate carrier (7), and the friction plates on the vehicle drive side interact as external plates (6) with an external plate carrier (8).

6. Power train according to the preceding claim, **characterized in that** when the secondary axle (2) is connected the external plate carrier (8) feeds oil in order to cool and/or lubricate the friction plates.

## Revendications

1. Chaîne cinématique d'un véhicule automobile, comprenant un essieu principal (1) entraîné en permanence par le biais d'une chaîne cinématique principale et un essieu secondaire (2) embrayable comme auxiliaire de l'essieu principal par le biais d'un dispositif d'embrayage (3), le dispositif d'embrayage (3) possédant un mécanisme d'embrayage par le biais duquel la chaîne cinématique secondaire peut être intégrée dans la chaîne cinématique qui transmet la puissance motrice totale, la puissance motrice de l'essieu secondaire, lorsque l'essieu secondaire (2) est embrayé, étant envoyée dans des arbres latéraux d'essieu secondaire (12) de l'essieu secondaire (2) par le biais d'au moins un accouplement d'arbre latéral (4, 36) et transmise aux roues motrices de l'essieu secondaire (2), le mécanisme d'embrayage et/ou l'au moins un accouplement d'arbre latéral (4, 36) possédant au moins un accouplement à friction et la portion de la chaîne cinématique secondaire qui se trouve entre le dispositif d'embrayage (3) et l'au moins un accouplement d'arbre latéral (4, 36) étant conçue sous la forme d'une portion de chaîne cinématique secondaire débrayable qui, lorsque l'essieu secondaire (2) est débrayé, est débrayée à la fois de la chaîne cinématique principale, notamment de l'essieu principal (1), et des roues motrices secondaires, dans la chaîne cinématique se trouve une unité d'entraînement d'essieu (9) qui entraîne l'essieu secondaire (2) et qui comprend un différentiel d'essieu secondaire (35), lequel comporte un engrenage différentiel à complémentarité de formes muni de roues de compensation, destiné à transmettre la puissance motrice aux arbres latéraux d'essieu secondaire (12) de l'essieu secondaire (2), **caractérisée en ce que**
l'unité d'entraînement d'essieu (9) formant un carter d'accouplement qui, en vue de former un logement pour l'accouplement d'arbre latéral (4), possède d'un côté une cavité orientée vers l'extérieur fermée par le biais d'un couvercle amovible, un accouplement d'arbre latéral (4) à action par friction pour un premier arbre latéral d'essieu secondaire (12) étant disposé dans le logement d'un côté de l'engrenage différentiel, et
- un accouplement d'arbre latéral (36) à action par complémentarité de formes pour un deuxième arbre latéral d'essieu secondaire (12) se trouvant de l'autre côté de l'engrenage différentiel, lequel est commuté par le biais d'un élément de commutation avec une synchronisation d'essieu secondaire (38)
ou
- aucun accouplement d'arbre latéral (36) n'est présent de l'autre côté de l'engrenage différentiel, de sorte qu'une séparation du deuxième arbre latéral d'essieu secondaire (12) d'un jeu de roues de compensation de l'engrenage différentiel n'a pas lieu et les roues de compensation tournent en même temps que l'engrenage différentiel.

2. Chaîne cinématique selon la revendication précédente, **caractérisée en ce que** le dispositif d'embrayage (3) possède un engrenage de transmission de force à fonctionnement par complémentarité de formes, notamment un engrenage angulaire fonctionnant par le biais de roues dentées.

3. Chaîne cinématique selon l'une des revendications précédentes, **caractérisée en ce que** le dispositif d'embrayage (3) est disposé sur l'essieu principal (1) et la puissance motrice d'essieu secondaire est prélevée directement d'un arbre d'essieu principal au travers du mécanisme d'embrayage lorsque la chaîne cinématique secondaire est embrayée.

4. Chaîne cinématique selon la revendication 2 ou la revendication 3 en association avec la revendication 2, **caractérisée en ce que** la synchronisation des vitesses de rotation (16) dans le mécanisme d'embrayage de l'engrenage de transmission de force en vue d'établir la complémentarité de formes est effectuée ou au moins assistée par le biais de l'au moins un accouplement d'arbre latéral (4, 36).

5. Chaîne cinématique selon l'une des revendications précédentes, **caractérisée en ce que** l'au moins un accouplement d'arbre latéral (4) à action par friction est formé par un accouplement à lamelles à friction, les lamelles de friction reliées en rotation solidaire aux roues motrices secondaires, en tant que lamelles intérieures (5) coopérant avec un porte-lamelles intérieur (7) et les lamelles de friction côté groupe propulseur du véhicule, en tant que lamelles extérieures (6), coopérant avec un porte-lamelles extérieur (8).

6. Chaîne cinématique selon la revendication précédente, **caractérisée en ce que** le porte-lamelles extérieur (8), lorsque l'essieu secondaire (2) est embrayé, transporte de l'huile destinée à refroidir et/ou à lubrifier les lamelles de friction.
